# EUROPÄISCHE PATENTANMELDUNG

(11) **EP 3 032 135 A1**
(43) Veröffentlichungstag der Anmeldung: **15.06.2016**
(21) Anmeldenummer: 15197428.4
(22) Anmeldetag: 02.12.2015
(51) Int. Cl.: F16F 9/36, F16F 9/32

(54) **STOSSDÄMPFER UND DESSEN VERWENDUNG**

(30) Priorität: 12.12.2014 DE 102014018287; 15.07.2015 DE 102015008987
(71) Anmelder: Carl Freudenberg KG, 69469 Weinheim (DE)
(72) Erfinder: Emig, Jürgen, 64689 Grasellenbach (DE); Watling, Simon, Blyth, Northumberland, NE242PR (GB); Billany, Matt, Washington, Tyne and Wear, NE37 3LW (GB); Waddell, Paul, North Shields, Tyne and Wear, NE30 3DF (GB); Dixon, Ross, Newcastle Upon Tyne, Tyne and Wear, NE12 8NS (GB)

(57) **Zusammenfassung**

Stoßdämpfer, umfassend einen Arbeitszylinder (11) mit einem abgedichteten Arbeitsraum (7), der mit einem abzudichtenden Medium (6) gefüllt ist, wobei im Arbeitsraum (7) ein Arbeitskolben (12) in axialer Richtung (13) hin- und herbeweglich angeordnet und mit einer Kolbenstange (14) relativ ortsfest verbunden ist, wobei der Arbeitszylinder (11) stirnseitig einerseits eine Öffnung (15) aufweist, die durch einen Deckel (16) dicht verschlossen ist und wobei die Kolbenstange (14) den Deckel (16) in axialer Richtung (13) durchdringt und vom Deckel (16) dichtend und führend umschlossen ist.
Der Deckel (16) ist einstückig ausgebildet.

## Beschreibung

### Technisches Gebiet

Die Erfindung betrifft einen Stoßdämpfer und dessen Verwendung, wobei der Stoßdämpfer einen Arbeitszylinder mit einem abgedichteten Arbeitsraum umfasst, der mit einem abzudichtenden Medium gefüllt ist, wobei im Arbeitsraum ein Arbeitskolben in axialer Richtung hin- und herberweglich angeordnet und mit einer Kolbenstange relativ ortsfest verbunden ist, wobei der Arbeitszylinder stirnseitig einerseits eine Öffnung aufweist, die durch einen Deckel dicht verschlossen ist und wobei die Kolbenstange den Deckel in axialer Richtung durchdringt und vom Deckel dichtend und führend umschlossen ist.

### Stand der Technik

Solche Stoßdämpfer sind allgemein bekannt und gelangen beispielsweise im Fahrwerk von Kraftfahrzeugen zur Anwendung.
Stoßdämpfer lassen Schwingungen von gefederten Massen möglichst rasch abklingen, wobei gefederte Massen bei der zuvor genannten Verwendung durch die Räder des Kraftfahrzeugs gebildet sind.
Das abzudichtende Medium im Arbeitsraum ist üblicherweise durch Öl gebildet. Die Dämpfung von in den Stoßdämpfer eingeleiteten Schwingungen erfolgt dadurch, dass der Arbeitskolben mittels der Kolbenstange innerhalb des Arbeitsraums in axialer Richtung hin- und herbewegt wird, wobei das im Arbeitsraum befindliche Öl von einer Stirnseite des Arbeitskolbens durch im Arbeitskolben angeordnete Dämpfungsventile hindurch zur anderen Seite des Arbeitskolbens strömt. Die Dämpfungsventile setzen dem durch den Arbeitskolben hindurch fließenden Öl einen Widerstand entgegen. Dadurch wird eine Druckdifferenz stirnseitig beiderseits des Arbeitskolbens erzeugt, die der sich relativ zum Arbeitszylinder bewegenden Kolbenstange eine Dämpfungskraft entgegen setzt.
Ist der Stoßdämpfer beispielsweise als Einrohr-Gasdruckstoßdämpfer ausgebildet, ist in axialer Richtung benachbart zu einem Ölreservoir, das sich im Arbeitsraum befindet, ein Gasreservoir angeordnet, wobei das Ölreservoir und das Gasreservoir durch einen schwimmend im Arbeitszylinder angeordneten Trennkolben mediumsdicht voneinander getrennt sind. Im Vergleich zu einem reinen Öldämpfer, der ein solches Gasreservoir nicht aufweist, sind die Gebrauchseigenschaften eines Einrohr-Gasdruckstoßdämpfers verbessert, weil ein Aufschäumen des Öls während der bestimmungsgemäßen Verwendung des Stoßdämpfers wirkungsvoll verhindert wird.
Deckel vorbekannter Stoßdämpfer sind mehrteilig ausgebildet und bestehen aus einer Vielzahl von Einzelteilen, die während der Herstellung des Stoßdämpfers zum Deckel zu komplettieren sind.
So besteht ein Ausführungsbeispiel eines vorbekannten Deckels zum Beispiel aus einem Führungsring, der radial innenseitig die Kolbenstange führt und radial außenseitig durch einen O-Ring gegenüber dem Arbeitszylinder abgedichtet ist. In diesem Führungsring ist eine dynamisch beanspruchte Dichtung aus einem FKM-Material angeordnet, deren Dichtlippe durch ein Anpresselement aus NBR dichtend an die abzudichtende Oberfläche der Kolbenstange angedrückt wird.
Sowohl die dynamische Dichtung als auch das Anpresselement sind in einem gemeinsamen Einbauraum im Führungsring angeordnet und werden durch eine scheibenförmige Sicherung in ihrem Einbauraum gehalten.
Durch den mehrteiligen Aufbau des Deckels ist dieser in fertigungstechnischer und wirtschaftlicher Hinsicht wenig zufriedenstellend.

Außerdem ist aus der DE 10 2011 117 820 A1 ein Dichtring mit Führungselement bekannt. Der vorbekannte Dichtring mit Führungselement ist in einem im Wesentlichen kongruent gestalteten Trägergehäuse eingesetzt, wobei der Dichtring einen Ringkörper mit einem Dichtbereich mit einer statischen Dichtlippe und einer dynamischen Dichtlippe umfasst sowie einen dem Dichtbereich gegenüberliegend angeordneten Abstreifbereich mit einer Abstreiflippe zur Anlage an einem beweglichen Maschinenteil. Außerdem umfasst der Dichtring einen Schmutzschild zur Anlage an einem ruhenden Maschinenteil und einen zwischen Dichtbereich und Abstreifbereich angeordneten Führungsbereich. Der Führungsbereich wird durch ein Führungselement gebildet, das in dem Führungsbereich zur Führung an dem beweglichen Maschinenteil angeordnet ist.

Eine weitere Dichtung ist aus der EP 1 703 181 A1 bekannt. Der Dichtring umfasst zumindest einen Stützabschnitt aus einem zum Spritzguss geeigneten Werkstoff, wobei die Dichtlippen stoffschlüssig mit dem Stützabschnitt verbunden sind. Eine Führungsfunktion für eine Stange oder Welle übernimmt der vorbekannte Dichtring nicht. Die Dichtlippen und der Stützabschnitt bestehen aus voneinander abweichenden Werkstoffen, wobei die Bindefläche von den Werkstoffen der Dichtlippen und des Stützabschnitts zumindest teilweise durchdrungen ist.
Hergestellt wird der vorbekannte Dichtring dadurch, dass in einem ersten Verfahrensschritt der erste Werkstoff der Dichtlippen mittels Spritzguss in ein Formwerkzeug eingebracht wird. In einem zweiten Verfahrensschritt wird der zweite Werkstoff des Stützrings mittels Spritzguss in das Formwerkzeug eingebracht. Der erste Werkstoff weist dabei einen niedrigeren Schmelzpunkt als der zweite Werkstoff auf.

### Darstellung der Erfindung

Der Erfindung liegt die Aufgabe zu Grunde, einen Stoßdämpfer der eingangs genannten Art derart weiterzuentwickeln, dass dieser einen einfachen und teilarmen Aufbau aufweist und dadurch einfach und kostengünstig herstellbar ist. Die Montage des Stoßdämpfers soll vereinfacht sein, und außerdem soll die Gefahr von Montagefehlern, insbesondere bei der Montage des Deckels, auf ein Minimum begrenzt sein.

Diese Aufgabe wird erfindungsgemäß mit den Merkmalen der Ansprüche 1 und 9 gelöst. Auf vorteilhafte Ausgestaltungen nehmen die darauf rückbezogenen Ansprüche Bezug.

Zur Lösung der Aufgabe ist es vorgesehen, dass der Deckel einstückig ausgebildet ist.
Der Deckel ist als einstückige Dichtungs-Führungs-Einheit ausgebildet. Hierbei ist von Vorteil, dass der Deckel nur aus einem Teil, nämlich aus der einstückigen Dichtungs-Führungs-Einheit, besteht.
Die Dichtungs-Führungs-Einheit muss nicht, wie zum Beispiel der Dichtring mit Führungsfunktion aus der DE 10 2011 117 820 A1 oder auch ein O-Ring, in ein Trägergehäuse eingesetzt werden. Die Dichtungs-Führungs-Einheit bildet direkt den Deckel des Stoßdämpfers und verschließt die stirnseitige Öffnung des Arbeitszylinders. Außerdem dichtet sie das abzudichtende Medium aus dem Arbeitszylinder gegenüber der Umgebung ab, sowohl radial außenumfangsseitig gegenüber dem Arbeitszylinder, als auch radial innenumfangsseitig gegenüber der Kolbenstange. Außerdem übernimmt die Dichtungs-Führungs-Einheit die Führung der Kolbenstange, die die Dichtungs-Führungs-Einheit in axialer Richtung zentral durchdringt.
Die Dichtungs-Führungs-Einheit wird auch als Monoblock bezeichnet.

Nach einer vorteilhaften Ausgestaltung ist es vorgesehen, dass die Dichtungs-Führungs-Einheit einen Führungsring aus einem zäh-harten Werkstoff, zumindest eine dynamisch beanspruchte Dichtlippe und zumindest eine statisch beanspruchte Dichtlippe umfasst, wobei die dynamisch beanspruchte Dichtlippe und die statisch beanspruchte Dichtlippe aus einem gummielastischen Werkstoff bestehen und mit dem Führungsring verbunden sind, wobei zumindest eine erste und eine zweite dynamisch beanspruchte Dichtlippe mit dem Führungsring verbunden sind, wobei die erste dynamisch beanspruchte Dichtlippe zur Abdichtung eines abzudichtenden Mediums aus einem abzudichtenden Raum und die zweite dynamisch beanspruchte Dichtlippe zur Abdichtung von Verunreinigungen aus der Umgebung ausgebildet sind und wobei die erste Dichtlippe der zweiten Dichtlippe, von der Umgebung axial in Richtung des abzudichtenden Raums betrachtet, in einer funktionstechnischen Reihenschaltung nachgeschaltet ist.
Während der bestimmungsgemäßen Verwendung des Dichtrings bewirkt der Führungsring, dass die mechanische Belastung auf die Dichtlippen begrenzt ist, so dass der Dichtring insgesamt gleichbleibend gute Gebrauchseigenschaften während einer langen Gebrauchsdauer aufweist.
Der Dichtring kann generell als Kolben- oder Stangendichtung zur Anwendung gelangen und dichtet in einem solchen Fall Maschinenelemente gegeneinander ab, die einander im Wesentlichen konzentrisch zugeordnet sind.
Während der bestimmungsgemäßen Verwendung des Dichtrings kann es vorkommen, dass die gegeneinander abzudichtenden Maschinenelemente, zwischen denen der Dichtring angeordnet ist, in radialer Richtung eine exzentrische Verlagerung zueinander aufweisen. Ohne den Führungsring würden die Dichtlippen in einem solchen Fall unerwünscht stark verformt. Eine Beschädigung/ Zerstörung der Dichtlippen wäre die Folge.
Durch den Führungsring ist die mechanische Belastung auf die Dichtlippen in jedem Fall auf ein unkritisches Maß begrenzt. Bei einer exzentrischen Verlagerung der abzudichtenden Maschinenelemente relativ zueinander würden sich zunächst die Dichtlippen elastisch verformen, jedoch nur soweit, dass dies bezüglich ihrer Gebrauchseigenschaften und Haltbarkeit unproblematisch ist. Wird die exzentrische Verlagerung der abzudichtenden Maschinenelemente demgegenüber größer, erfolgt die Abstützung der gegeneinander abzudichtenden Maschinenelemente mittels des Führungsrings, an dem die Dichtlippen angeordnet sind. Die zusätzliche mechanische Belastung wird dann außerdem vom Führungsring und nicht mehr allein von den Dichtlippen aufgenommen.

Außerdem ist von Vorteil, dass die zweite dynamisch beanspruchte Dichtlippe die erste dynamisch beanspruchte Dichtlippe vor Verunreinigungen, wie beispielsweise Schmutz oder Flüssigkeit, aus der Umgebung schützt. Die erste Dichtlippe ist der zweiten Dichtlippe, von der Umgebung axial in Richtung des abzudichtenden Raums betrachtet, in einer funktionstechnischen Reinschaltung nachgeschaltet.
Durch die zuvor genannte Ausgestaltung des Dichtrings weist dieser gleichbleibend gute Gebrauchseigenschaften während einer langen Gebrauchsdauer auf.

Unter einer Dichtungs-Führungs-Einheit im Sinne des beanspruchten Stoßdämpfers wird ein Bauteil verstanden, das alle Dichtungs- und Führungsfunktionen in sich vereint.

Gemäß einer vorteilhaften Ausgestaltung kann es vorgesehen sein, dass der Führungsring, im Schnitt betrachtet, im Wesentlichen rechteckig ausgebildet ist. Zum Beispiel kann der Führungsring, im Schnitt betrachtet, quadratisch ausgebildet sein. Ein solch kompakter Führungsring weist unter allen Betriebsbedingungen eine gute Festigkeit und Formbeständigkeit auf, so dass die mit dem Führungsring verbundenen Dichtlippen vor mechanischer Überbeanspruchung und daraus resultierendem Verschleiß gut geschützt sind.

Der Führungsring kann aus einem polymeren Werkstoff bestehen. Werkstoffe, die hier zur Anwendung gelangen, können zum Beispiel durch thermoplastische Kunststoffe gebildet sein oder durch Duroplaste. Einerseits lässt sich ein solcher Führungsring aus den genannten Werkstoffen gut mit den elastomeren Werkstoffen verbinden, aus denen die Dichtlippen bestehen, andererseits ist die Reibung nur gering, wenn ein Führungsring aus einem derartigen Material an einem der abzudichtenden Maschinenelemente abgestützt ist, wobei sich der Führungsring zum Beispiel translatorisch - bezogen auf eines der Maschinenelemente - bewegt.

Bevorzugt kann es vorgesehen sein, dass alle dynamisch und statisch beanspruchten Dichtlippen einstückig in einander übergehend und materialeinheitlich ausgebildet sind. Dadurch ist die Herstellung des Dichtrings wesentlich vereinfacht und kostengünstig. Alle Dichtlippen werden in einem solchen Fall in einem Arbeitsgang mit dem Führungsring verbunden, zum Beispiel angespritzt.

Die Dichtlippen können durch zumindest eine kanalförmige Ausnehmung im Führungsring einstückig ineinander übergehend und materialeinheitlich ausgebildet sein.
Im Hinblick auf eine vereinfachte Herstellbarkeit ist es bevorzugt vorgesehen, dass mehrere der kanalförmigen Ausnehmungen zur Anwendung gelangen, die weiter bevorzugt gleichmäßig in Umfangsrichtung verteilt angeordnet sind. Durch die Verbindung aller Dichtlippen mittels der kanalförmigen Ausnehmungen sind die Dichtlippen besonders dauerhaltbar am Führungsring festgelegt. Durch die Ausnehmungen sind die Dichtlippen und der Führungsring nicht nur stoffschlüssig sondern auch formschlüssig miteinander verbunden. Durch mehrere, gleichmäßig in Umfangsrichtung verteilt angeordnete Ausnehmungen ist von Vorteil, dass sich der elastomere Werkstoff, aus dem die Dichtlippen bestehen, während der Herstellung des Dichtrings besonders gleichmäßig mit dem Führungsring verbindet. Bei der Herstellung des Dichtrings gibt es dadurch besonders wenig Ausschuss.

Die Dichtungs-Führungs-Einheit kann in einem Mehrkomponenten-Spritzgieß- oder Pressverfahren hergestellt werden. In einem ersten Verfahrensschritt wird ein erster Werkstoff, aus dem der Führungsring besteht, idealerweise mittels Spritzguss in ein Formwerkzeug eingebracht. In einem zweiten Verfahrensschritt wird ein zweiter Werkstoff, aus dem die Dichtlippen bestehen, idealerweise mittels Spritzguss in das Formwerkzeug eingebracht, wobei sich der zweite Werkstoff dabei stoffschlüssig mit dem ersten Werkstoff, aus dem der Führungsring besteht, verbindet. Im zweiten Verfahrensschritt durchdringt der elastomere Werkstoff dabei die kanalförmigen Ausnehmungen im Führungsring, so dass alle Dichtlippen einstückig ineinander übergehend und materialeinheitlich ausgebildet sind.

Die Abläufe im Pressverfahren sind die Folgenden:
Die Dichtungs-Führungs-Einheit kann im 2-Komponentenverfahren wie auch im 1-Komponentenverfahren hergestellt werden.
Beim 2-Komponentenverfahren wird erst das Kunststoffträgerteil spritzgießtechnisch hergestellt, und mit einer zweiten Spritzeinheit wird dann der elastomere Werkstoff zur Erzielung der Dichtungsgeometrien eingebracht. Beim 1-Komponentenverfahren wird erst das Kunststoffteil durch eines der üblichen Spritzgieß- oder Pressverfahren hergestellt. Danach wird das Kunststoffteil in ein Werkzeug zur Elastomerverarbeitung eingelegt, und die entsprechenden Dichtungsgeometrien werden mit einem elastomeren Werkstoff erzeugt.
Je nach Werkstoffkombination kann auch das Aufbringen einer Bindeschicht zwischen den Werkstoffen erforderlich sein.

Außerdem betrifft die Erfindung die Verwendung eines Stoßdämpfers, wie zuvor beschrieben, im Fahrwerk eines Kraftfahrzeugs.
In einem solchen Fall wird die Kolbenstange des Stoßdämpfers durch die Dichtungs-Führungs-Einheit gegenüber dem Arbeitszylinder abgedichtet, wobei sich die Kolbenstange zusammen mit dem Arbeitskolben innerhalb des Arbeitsraums translatorisch hin- und herbewegt. Die dynamisch beanspruchten Dichtlippen umschließen die Kolbenstange unter elastischer radialer Vorspannung dichtend. Die statisch beanspruchte Dichtlippe dichtend gegenüber dem Arbeitszylinder ab.

### Kurzbeschreibung der Erfindung

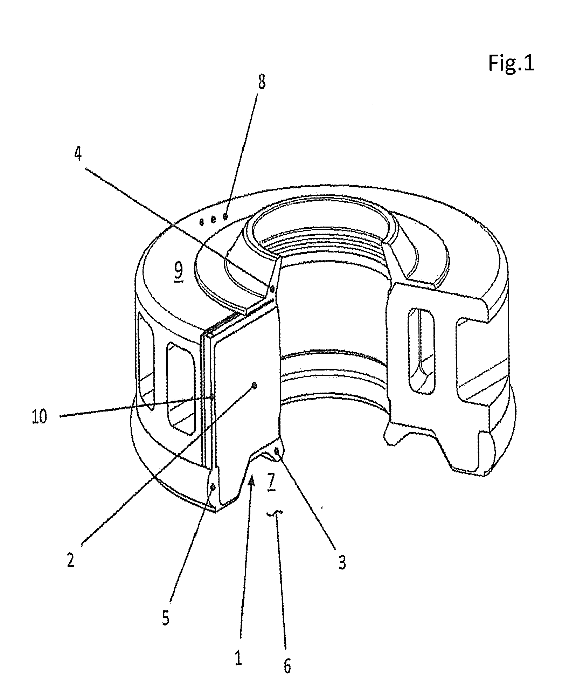

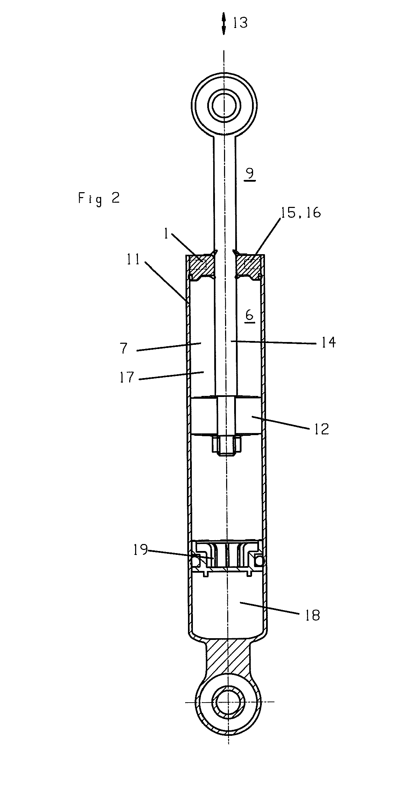

Ein Ausführungsbeispiel des erfindungsgemäßen Stoßdämpfers wird nachfolgend anhand der Figuren 1 und 2 näher erläutert.

Diese zeigen jeweils in schematischer Darstellung:
- Figur 1: ein Ausführungsbeispiel einer einstückigen Dichtungs-Führungs-Einheit, die als Deckel in einem Stoßdämpfer zur Anwendung gelangt,
- Figur 2: ein Ausführungsbeispiel eines erfindungsgemäßen Stoßdämpfers, der eine einstückige Dichtungs-Führungs-Einheit gemäß Figur 1 umfasst.

### Ausführung der Erfindung

In Figur 1 ist ein Ausführungsbeispiel einer Dichtungs-Führungs-Einheit 1 in schematischer Darstellung gezeigt. Zum besseren Verständnis ist ein Segment aus dem Dichtring herausgetrennt dargestellt, um das Innere des Dichtrings besser erkennen zu können.

Die Dichtungs-Führungs-Einheit 1 umfasst einen Führungsring 2 aus einem polymeren Werkstoff. Radial innenumfangsseitig sind zwei dynamisch beanspruchte Dichtlippen 3, 4 angeordnet, radial außenumfangsseitig eine statisch beanspruchte Dichtlippe 5, wobei die Dichtlippen 3, 4, 5 einstückig ineinander übergehend ausgebildet sind und aus einem gummielastischen Werkstoff bestehen.

Verwendet wird die hier gezeigte Dichtungs-Führungs-Einheit 1 in einem Stoßdämpfer für Kraftfahrzeuge gemäß Fig. 2.

Die beiden dynamisch beanspruchten Dichtlippen 3, 4 sind in einer funktionstechnischen Reinschaltung angeordnet, derart, dass die erste Dichtlippe 3 der zweiten Dichtlippe 4, von der Umgebung 9 axial in Richtung des abzudichtenden Raums 7 betrachtet, in einer funktionstechnischen Reinschaltung nachgeschaltet ist.

Die erste Dichtlippe 3 ist stirnseitig einerseits des Führungsrings 2, die zweite Dichtlippe 4 stirnseitig andererseits des Führungsrings 2 angeordnet. Die erste dynamisch beanspruchte Dichtlippe 3 dichtet abzudichtendes Medium 6 aus dem abzudichtenden Raum 7 ab, die zweite dynamisch beanspruchte Dichtlippe 4 verhindert, dass Verunreinigungen, wie zum Beispiel Staub und/ oder Feuchtigkeit, aus der Umgebung 9 axial in Richtung der ersten dynamisch beanspruchten Dichtlippe 3 vordringen und zu einer Beschädigung/ Zerstörung der ersten dynamisch beanspruchten Dichtlippe 3 führen.

Im Führungsring 2 sind mehrere kanalförmige Ausnehmungen 10 angeordnet, die gleichmäßig in Umfangsrichtung verteilt angeordnet sind, wobei eine dieser Ausnehmungen 10 an der linken Schnittfläche des ausgeschnittenen Dichtrings dargestellt ist. Die kanalförmige Ausnehmung 10 verbindet alle Dichtlippen 3, 4 und 5 miteinander.

Der Dichtring ist, wie zuvor beschrieben, durch ein Mehrkomponenten-Spritzgiess- oder Pressverfahren hergestellt.

Der elastomere Werkstoff, aus dem die Dichtlippen 3, 4, 5 bestehen, ist stoffschlüssig mit dem Führungsring 2 verbunden.

In Figur 2 ist ein Ausführungsbeispiel des erfindungsgemäßen Stoßdämpfers gezeigt, in dem die Dichtungs-Führungs-Einheit 1 aus Fig. 1 zur Anwendung gelangt. Die Dichtungs-Führungs-Einheit bildet allein den Deckel 16 und verschießt die Öffnung 15 des Arbeitszylinders 11; andere Bauteile, als die Dichtungs-Führungs-Einheit 1 umfasst der Deckel 16 nicht.

Der Stoßdämpfer umfasst einen Arbeitszylinder 11 mit einem abgedichteten Arbeitsraum 7, der mit einem abzudichtenden Medium 6, in diesem Ausführungsbeispiel mit einem Öl, gefüllt ist.

Der hier dargestellte Stoßdämpfer ist als Einrohr-Gasdruckstoßdämpfer ausgebildet, wobei innerhalb des Arbeitsraums 7 nicht nur ein Ölreservoir 17, sondern auch ein Gasreservoir 18 angeordnet ist. Das Ölreservoir 17 und das Gasreservoir 18 sind in axialer Richtung 13 benachbart zueinander angeordnet und durch einen Trennkolben 19 mediumsdicht von einander getrennt. Der Trennkolben 19 ist im Arbeitszylinder 11 schwimmend geführt.

Der in Figur 2 dargestellte Stoßdämpfer gelangt im Fahrwerk eines Kraftfahrzeugs zur Anwendung, um Schwingungen von gefederten Massen möglichst rasch abklingen zu lassen. Im Arbeitsraum 7 ist der Arbeitskolben 12 in axialer Richtung 13 hin- und herbeweglich angeordnet und mit der Kolbenstange 14 relativ ortsfest verbunden. Stirnseitig einerseits des Arbeitszylinders 11 ist die Öffnung 15 angeordnet, die durch die Dichtungs-Führungs-Einheit 1 aus Figur 1 dicht verschlossen ist. Die Dichtungs-Führungs-Einheit 1 ist demnach als einstückiger Deckel 16 ausgebildet.

Die Kolbenstange 14 durchdringt den Deckel 16 in axialer Richtung 13 und wird vom Deckel 16 dichtend und führend umschlossen.

Zur Funktion des Stoßdämpfers wird Folgendes ausgeführt:
Die Dämpfung von in den Stoßdämpfer eingeleiteten Schwingungen erfolgt dadurch, dass der Arbeitskolben 12 mittels der Kolbenstange 14 innerhalb des Ölreservoirs 17 in axialer Richtung 13 hin- und herbewegt wird, wobei das im Ölreservoir 17 befindliche Öl, das das abzudichtende Medium 6 bildet, von einer Stirnseite des Arbeitskolbens 12 durch im Arbeitskolben 12 angeordnete Dämpfungsventile hindurch zur anderen Stirnseite des Arbeitskolbens 12 strömt. Die Dämpfungsventile setzten dem durch den Arbeitskolben 12 hindurchfließenden Öl einen Widerstand entgegen. Dadurch wird eine Druckdifferenz stirnseitig beiderseits des Arbeitskolbens 12 erzeugt, die der sich relativ zum Arbeitszylinder 11 bewegenden Kolbenstange 14 eine Dämpfungskraft entgegensetzt.
Innerhalb des Gasreservoirs 18 ist ein vorgespanntes Gas, zum Beispiel Stickstoff, angeordnet. Innerhalb des Arbeitszylinders 11 herrscht ein Basisinnendruck von etwa 20 bis 30 bar, wobei im statischen Zustand des Stoßdämpfers dieser Basisinnendruck axial beiderseits des Trennkolbens 19 anliegt. Das Gasreservoir 18 hat die Aufgabe, dafür zu sorgen, dass beim Einfedern des Arbeitskolbens 12 axial in Richtung des Gasreservoirs 18 die Ölseite auf der dem Gasreservoir 18 abgewandten Seite des Arbeitskolbens 12 nicht abreist und die Gefahr von Kavitation auf ein Minimum begrenzt ist. Durch das Vorsehen des Gasreservoirs 18 wird ein Aufschäumen des Öls während der bestimmungsgemäßen Verwendung des Stoßdämpfers wirkungsvoll verhindert. Das Gasreservoir 18 kann als Gaspolster verstanden werden, das einen Volumenausgleich beim Einfahren der Kolbenstange 14 übernimmt.
Auch bei einer hohen Beanspruchung des Stoßdämpfers steht deshalb die volle Dämpfkraft zur Verfügung.

## Patentansprüche

1. Stoßdämpfer, umfassend einen Arbeitszylinder (11) mit einem abgedichteten Arbeitsraum (7), der mit einem abzudichtenden Medium (6) gefüllt ist, wobei im Arbeitsraum (7) ein Arbeitskolben (12) in axialer Richtung (13) hin- und herbeweglich angeordnet und mit einer Kolbenstange (14) relativ ortsfest verbunden ist, wobei der Arbeitszylinder (11) stirnseitig einerseits eine Öffnung (15) aufweist, die durch einen Deckel (16) dicht verschlossen ist und wobei die Kolbenstange (14) den Deckel (16) in axialer Richtung (13) durchdringt und vom Deckel (16) dichtend und führend umschlossen ist, **dadurch gekennzeichnet, dass** der Deckel (16) einstückig ausgebildet ist.

2. Stoßdämpfer nach Anspruch 1, **dadurch gekennzeichnet, dass** der Deckel (16) als einstückige Dichtungs-Führungs-Einheit (1) ausgebildet ist.

3. Stoßdämpfer nach Anspruch 2, **dadurch gekennzeichnet, dass** die Dichtungs-Führungs-Einheit (1) einen Führungsring (2) aus einem zäh-harten Werkstoff, zumindest eine dynamisch beanspruchte Dichtlippe (3, 4) und zumindest eine statisch beanspruchte Dichtlippe (5) umfasst, dass die dynamisch beanspruchte Dichtlippe (3, 4) und die statisch beanspruchte Dichtlippe (5) aus einem gummielastischen Werkstoff bestehen und mit dem Führungsring (2) verbunden sind, dass zumindest eine erste (3) und eine zweite dynamisch beanspruchte Dichtlippe (4) mit dem Führungsring (2) verbunden sind, dass die erste dynamisch beanspruchte Dichtlippe (3) zur Abdichtung des abzudichtenden Mediums (6) aus dem abzudichtenden Arbeitsraum (7) und die zweite dynamisch beanspruchte Dichtlippe (4) zur Abdichtung von Verunreinigungen (8) aus der Umgebung (9) ausgebildet sind und dass die erste Dichtlippe (3) der zweiten Dichtlippe (4), von der Umgebung (9) in Richtung des abzudichtenden Raums (7) betrachtet, in einer funktionstechnischen Reihenschaltung nachgeschaltet ist.

4. Stoßdämpfer nach Anspruch 3, **dadurch gekennzeichnet, dass** der Führungsring (2), im Schnitt betrachtet, im Wesentlichen rechteckig ausgebildet ist.

5. Stoßdämpfer nach einem der Ansprüche 3 oder 4, **dadurch gekennzeichnet, dass** der Führungsring (2) aus einem polymeren Werkstoff besteht.

6. Stoßdämpfer nach einem der Ansprüche 3 bis 5, **dadurch gekennzeichnet, dass** die dynamisch beanspruchten Dichtlippen (3, 4) radial innenumfangsseitig oder radial außenumfangsseitig und die statisch beanspruchte Dichtlippe (5) radial außenumfangseitig oder radial innenumfangsseitig des Führungsrings (2) angeordnet sind.

7. Stoßdämpfer nach einem der Ansprüche 3 bis 6, **dadurch gekennzeichnet, dass** alle dynamisch (3, 4) und statisch beanspruchten Dichtlippen (5) einstückig ineinander übergehend und materialeinheitlich ausgebildet sind.

8. Stoßdämpfer nach einem der Ansprüche 3 bis 7, **dadurch gekennzeichnet, dass** die Dichtlippen (3, 4, 5) durch zumindest eine kanalförmige Ausnehmung (10) im Führungsring (2) einstückig ineinander übergehend und materialeinheitlich ausgebildet sind.

9. Verwendung eines Stoßdämpfers nach einem der Ansprüche 1 bis 8 im Fahrwerk eines Kraftfahrzeugs.
